# EUROPÄISCHE PATENTSCHRIFT

(11) **EP 0 694 586 B1**
(45) Veröffentlichungstag und Bekanntmachung des Hinweises auf die Patenterteilung: **19.04.2000**
(21) Anmeldenummer: 95109595.9
(22) Anmeldetag: 21.06.1995
(51) Int. Cl.: C09B 23/08, G03C 1/83, G03C 5/16, G03C 1/20, G11B 7/24

(54) **Verwendung von Indolenincyanindisulfonsäure-Derivaten als infrarotabsorbierende Verbindungen**
Use of indoleninecyaninedisulfonic acid derivatives as infrared absorbing compounds
Utilisation de dérivés du type d'acide disulfonique indolonine cyanine comme composés absorbant dans l'infrarouge

(30) Priorität: 29.07.1994 DE 4426892
(43) Veröffentlichungstag der Anmeldung: 31.01.1996
(73) Patentinhaber: Riedel-de Haen GmbH, 30926 Seelze (DE)
(72) Erfinder: Lonsky, Ralph, Dr., D-31535 Neustadt (DE); Lehmann, Lutz Uwe, Dr., D-30926 Seelze (DE)
(74) Vertreter: Geissler, Bernhard, Dr. jur., Dipl.-Phys.

(56) Entgegenhaltungen:
- EP-A- 0 251 282
- EP-A- 0 288 083
- EP-A- 0 445 627
- EP-A- 0 591 820
- US-A- 4 839 265
- US-A- 4 914 001
- CHEMICAL ABSTRACTS, vol. 115, no. 14, 7.Oktober 1991 Columbus, Ohio, US; abstract no. 146699z, N. NANBA ET. AL. 'Optical recording media using cyanine dye with indolenine ring' Seite 732; Spalte 2; & JP-A-03 009 883 (TDK CORP.)
- CHEMICAL ABSTRACTS, vol. 112, no. 18, 30.April 1990 Columbus, Ohio, US; abstract no. 169019e, M. OHASHI ET. AL. 'Siver halide photographic material having pyrrolyl-containing halation- and irradiation-inhibiting dye' Seite 730; Spalte 2; & JP-A-01 239 548 (MITSUBISHI PAPER MILLS, LTD.)
- CHEMICAL ABSTRACTS, vol. 112, no. 12, 19.März 1990 Columbus, Ohio, US; abstract no. 108465a, N. KAGAWA ET. AL. 'Silver halid photographic material containing a cyanine dye to improve antihalation effect.' Seite 663; Spalte 2; & JP-A-01 147 451 (KONICA CO.)

## Beschreibung

Die vorliegende Erfindung betrifft die Verwendung von Indolenincyaninfarbstoffen als infrarotabsorbierende Mittel in hydrophilen Kolloidschichten, speziell solchen in Aufzeichnungsmaterialien, insbesondere fotografischen Aufzeichnungsmaterialien, sowie solchen für IR-Detektionsprozesse, weiter hydrophile Kolloidschichten mit solche Indolenincyaninfarbstoffe enthaltenden Materialien und neue Indolenincyaninfarbstoffe.

Es ist bekannt, in fotografischen Aufzeichnungsmaterialien, insbesondere solchen auf Silberhalogenidbasis, Kolloidschichten zu verwenden, die Farbstoffe, darunter auch infrarotabsorbierende Farbstoffe, enthalten. Fotografische Aufzeichnungsmaterialien weisen im allgemeinen einen Mehrschichtaufbau auf. Die farbstoffhaltigen Schichten können in verschiedenen Positionierungen innerhalb des Mehrschichtenmaterials eingesetzt werden. Farbstoffe können direkt in der bzw. den lichtempfindlichen, Silberhalogenide enthaltenden Kolloidschichten enthalten sein. Infrarotempfindliche Materialien auf Silberhalogenidbasis enthalten dabei eine oder mehrere Kolloidschichten mit einem oder mehreren infrarotabsorbierenden Farbstoffen als Sensibilisatoren. Farbstoffe, insbesondere auch infrarotabsorbierende Farbstoffe enthaltende Schichten fungieren aber z.B. auch als Hilfs- oder Filterschichten.

Beispielsweise haben farbstoffhaltige Schichten unter anderem die Aufgabe, die Abbildungsschärfe der Aufzeichnungsmaterialien zu erhöhen. Dabei ist es auch bekannt, farbstoffhaltige Schichten auf die Rückseite eines fotografischen Materials zur Unterdrückung von Unschärfeeffekten durch Reflexion von Streulicht aufzubringen (Antihaloschichten).

Weiterhin ist auch bekannt, daß infrarot-detektierende Geräte vorteilhaft zur automatischen Prozeßsteuerung bzw. -leitung herangezogen werden können, insbesondere auch zur automatischen Prozeßsteuerung bzw. -leitung bei Herstellung und Be- oder Verarbeitung von Aufzeichnungsmaterialien. Damit dabei das zu bearbeitende Gut, z.B. das Aufzeichnungsmaterial, zur Wechselwirkung mit der Steuereinheit befähigt ist, muß es eine geeignete Infrarotabsorption besitzen. Typischerweise werden Steuerdetektoren verwendet, die im Bereich von 850 bis 950 nm arbeiten, was eine entsprechende Absorption z.B. des Aufzeichnungsmaterials in diesem Bereich erfordert. Je nachdem, ob das Detektionssystem, das z.B. einen Infrarotlaser enthalten kann, in einem bestimmten Bereich eine Absorption oder keine Absorption feststellt, werden dann die gewünschten Folgeaktionen ausgelöst. Auch eine analoge Detektionskopplung ist möglich. Desweiteren ist bekannt, daß IR-detektierende Geräte vorteilhaft zur Erkennung von IR-absorbierenden Materialien eingesetzt werden können. So können z.B. Dokumente, Wertpapiere, Briefe etc. durch das Aufbringen einer oder mehrerer IR-absorbierender Schichten über das gesamte Material oder ausgewählte Positionen kenntlich gemacht oder codiert werden.

Für die obigen Zwecke geeignete Farbstoffe müssen insbesondere eine geeignete Absorptionscharakteristik besitzen. Für den Einsatz in fotografischen Aufzeichnungsmaterialien müssen die Farbstoffe während des fotografischen Naßverarbeitungsprozesses vollständig entfärbt werden, und/oder sie müssen leicht aus dem fotografischen Material herausgewaschen werden, so daß das entwickelte Material keine Restfärbung nach der Verarbeitung aufweist. Außerdem soll es zu keiner Anfärbung der Bäder kommen.

Es ist bekannt, insbesondere für infrarotempfindliche fotografische Silberhalogend-Materialien infrarotabsorbierende Farbstoffe vom Typ der Heptamethincyanine mit Indolenin-Endgruppen zu verwenden (siehe z.B. US-A-4 876 181; EP-A-445 627; Chem. Abstr. 112:169019e (1990); Chem. Abstr. 112:108465a (1990)). Diese Farbstoffe erfüllen allerdings die gestellten Anforderungen nicht oder nur teilweise. Insbesondere haben diese Indolenin-Heptamethincyanine den Nachteil, daß sie mit allen vorgeschlagenen Substitutionsmustern zu kurzwellig absorbieren, d.h. nicht in der Lage sind, eine ausreichende IR-Absorption in dem für IR-Detektionszwecke wichtigen Bereich von 850 bis 950 nm bereitzustellen. In Frage kommende Farbstoffe müßten, um eine ausreichende Absorption zu erzielen, vielfach in einer unwirtschaftlich großen Menge eingesetzt werden. Zudem sind die Farbstoffe vielfach synthetisch nicht einfach zugänglich und/oder werden beim fotografischen Verarbeitungsprozeß nicht ausreichend entfärbt.

Es besteht somit Bedarf nach in den hydrophilen Kolloidschichten z.B. von fotografischen Aufzeichnungsmaterialien einsetzbaren, infrarotabsorbierenden Farbstoffen, die synthetisch einfach zugänglich sind, die eine geeignete Infrarotabsorption besitzen sowie eine ausreichende Entfärbbarkeit während der fotografischen Verarbeitung aufweisen.

Es wurde nun überraschenderweise gefunden, daß bestimmte Indolenincyanindisulfonsäure-Derivate diese Bedingungen erfüllen. Einzelne Vertreter dieser Farbstoffe sind als solche bereits bekannt (siehe Chem.Abstr. 111: 144195a (1989), Chem.Abstr. 115: 146699z (1991) und Chem.Abstr. 110:222544j (1989), die erfindungsgemäße Verwendung gehört allerdings noch nicht zum Stand der Technik.

Die vorliegende Erfindung betrifft somit die Verwendung von Farbstoffen der allgemeinen Formel I, 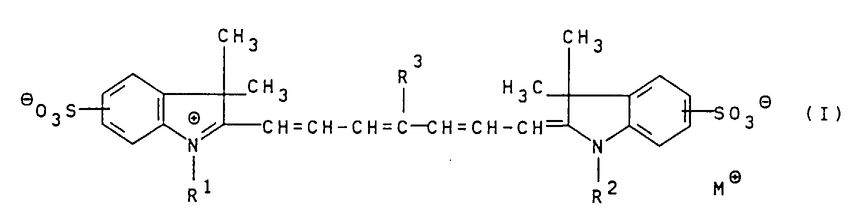 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy-bzw. Carboxylat- und keine Sulfatogruppen auftreten können, und
M^{⊕} für ein einwertiges Kation oder ein Äquivalent eines mehrwertigen Kations steht,
als infrarotabsorbierendes Mittel in hydrophilen Kolloidschichten.

(C₁-C₆)-Alkylgruppen bzw. (C₁-C₄)-Alkylgruppen können geradkettig oder verzweigt sein und bedeuten beispielsweise Methyl, Ethyl, n-Propyl, i-Propyl, n-Butyl, i-Butyl, sek-Butyl, tert-Butyl, n-Pentyl, 3-Methylbutyl oder n-Hexyl. Entsprechendes gilt, wenn Alkylgruppen substituiert sind oder als Substituenten auftreten, z.B. an Phenylgruppen oder in Alkoxygruppen. Bevorzugt sind n-Alkylgruppen, besonders bevorzugt (C₁-C₃)-n-Alkylgruppen, wie Methyl, Ethyl und n-Propyl. Eine ganz besonders bevorzugte Alkylgruppe ist Methyl.

Durch Halogen oder Phenyl substituiertes Alkyl ist beispielsweise Benzyl, 1-Phenylethyl, 2-Phenylethyl, 3-Phenylpropyl, 4-Phenylbutyl, 2-Fluorethyl, 2-Chlorethyl, 2-Bromethyl, 3-Chlorpropyl, 2-Chlor-2-methylpropyl, 4-Chlorbutyl oder 6-Chlorhexyl.

Ein Substituent an einer Alkylgruppe ist bevorzugt am endständigen C-Atom der Alkylgruppe gebunden.

Substituiertes Phenyl ist bevorzugt durch (C₁-C₄)-Alkoxy, (C₁-C₄)-Alkyl, Halogen oder (C₁-C₄)-Alkoxycarbonyl einfach oder zweifach substituiertes Phenyl. Monosubstituiertes Phenyl kann in der 2-, der 3- oder der 4-Position substituiert sein, disubstituiertes beispielsweise in 2,3-, in 3,4- oder 3,5-Position. Bevorzugt ist substituiertes Phenyl in der 4-Position substituiert.

Halogen bedeutet insbesondere Fluor, Chlor, Brom und Iod, wobei Chlor bevorzugt ist, (C₃-C₇)-Cycloalkyl insbesondere Cyclopropyl, Cyclobutyl, Cyclopentyl, Cyclohexyl und Cycloheptyl.

Die Sulfonatgruppen in den Indolenin-Endgruppen der Farbstoffe der allgemeinen Formel I können in der 5- oder der 6-Position des Indolrings stehen und können in den beiden Endgruppen auch in unterschiedlichen Positionen stehen.

Bevorzugt stehen sie in der 5-Position des Indolrings. Auch stehen sie bevorzugt in beiden Endgruppen in der gleichen Position.

R¹ und R² stehen bevorzugt für Wasserstoff, (C₁-C₄)-Alkyl, das auch durch Phenyl substituiert sein kann, oder für Phenyl. Besonders bevorzugt stehen R¹ und R² für (C₁-C₃)-n-Alkyl sowie weiterhin für Benzyl, ganz besonders bevorzugt für Methyl. Auch haben bevorzugt R¹ und R² die gleiche Bedeutung.

R³ steht bevorzugt für Wasserstoff oder (C₁-C₄)-Alkyl sowie weiterhin für (C₁-C₄)-Alkyl, das durch Phenyl substituiert ist, Phenyl, Halogen oder (C₃-C₇)-Cycloalkyl. Besonders bevorzugt steht R³ für Wasserstoff, (C₁-C₃)-n-Alkyl, Benzyl, Phenyl oder Halogen, ganz besonders bevorzugt für Wasserstoff oder Methyl.

M⊕ steht beispielsweise für ein Kation oder Kation-Äquivalent von Haupt- oder Nebengruppenelementen, z.B. von den Alkalimetallen Lithium, Natrium, Kalium, Rubidium und Cäsium, den Erdalkalimetallen Magnesium, Calcium, Strontium, Barium, oder z.B. den Übergangsmetallen Zink, Nickel, etc., oder auch für das Wasserstoffion oder beispielsweise für ein substituiertes Ammoniumion oder das Ammoniumion selbst. Als substituierte Ammoniumionen kommen beispielsweise Ammoniumionen in Frage, die einen, zwei, drei oder vier gleiche oder verschiedene Reste aus der Reihe Alkyl, Hydroxyalkyl, Phenylalkyl und Phenyl enthalten, wobei für Alkylgruppen das oben Gesagte gilt und (C₁-C₄)-Alkylgruppen bevorzugt sind. Beispiele sind das Dimethyl-, das Trimethyl-, das Triethyl-, das Ethyldiisopropyl-, das Tetramethyl-, das Tetraethyl-, das 2-Hydroxyethyl-, das Tris-(2-hydroxyethyl)-, das Phenyltrimethyl-, das Benzyltrimethyl-, das Benzyltriethyl-, das Diphenyldimethyl- oder das Tetraphenylammoniumion.

Für M^{⊕} stehende Kationen sind bevorzugt einwertige Kationen, wobei Alkalimetallkationen, substituierte Ammoniumionen und das Ammoniumion selbst sowie das Wasserstoffion besonders bevorzugt sind. Ganz besonders bevorzugt stehen für M^{⊕} das Natriumion, das Kaliumion, das Ammoniumion, das Triethylammoniumion und das Wasserstoffion.

Bevorzugt erfindungsgemäß eingesetzt wird der Farbstoff der allgemeinen Formel I, in der die beiden Sulfonatgruppen sich in den 5-Positionen der beiden endständigen Indolsysteme befinden, in der R¹ und R² für Methyl und R³ für Wasserstoff steht und M^{⊕} für das Natrium-, Kalium-, Ammonium- oder Triethylammoniumion, bevorzugt für das Natriumion steht.

Die erfindungsgemäß einsetzbaren Farbstoffe der allgemeinen Formel I können in einfacher, an sich bekannter Weise erhalten werden, beispielsweise durch Umsetzung des entsprechenden, in der 1-Position den Rest R¹ bzw. R² tragenden 2,3,3-Trimethyl-3H-indoliumsulfonats mit dem entsprechenden Glutacondialdehyd, der in der Regel in Form seines Dianilhydrochlorids eingesetzt wird, unter den üblichen, dem Fachmann geläufigen Bedingungen der Cyaninfarbstoffherstellung (siehe z.B. F.M. Hamer, Cyanine Dyes and Related Compounds, John Wiley & Sons, 1964). Die Herstellungsbeispiele veranschaulichen das Herstellungsverfahren.

Bei der erfindungsgemäßen Verwendung werden die Farbstoffe der allgemeinen Formel I in hydrophilen Kolloidschichten bevorzugt in Mengen von 5 bis 500 mg/m², besonders bevorzugt 10 bis 200 mg/m² eingesetzt.

Die Farbstoffe der allgemeinen Formel I lassen sich in einfacher, an sich bekannter Weise in die Kolloidschicht einarbeiten. Beispielsweise werden die Farbstoffe in einem geeigneten Lösungsmittel, insbesondere Wasser oder Alkoholen, wie z.B. Ethanol oder Methanol, gelöst und dann gegebenenfalls zusammen mit weiteren Zusätzen, z.B. Netzmitteln, in ein kolloidales Bindemittel eingebracht. Hydrophiles kolloidales Bindemittel, also Basis für die hydrophile Kolloidschicht, können übliche Substanzen wie Gelatine, Polyvinylalkohol, Carboxymethylcellulose, Natriumalginat, Casein oder Polyvinylpyrrolidon sein. Vorzugsweise wird, allein oder im Gemisch mit einem oder mehreren anderen Bindemitteln, Gelatine verwendet.

Neben dem kolloidalen Bindemittel und dem oder den Farbstoffen der allgemeinen Formel I und gewünschtenfalls weiteren Farbstoffen kann die hydrophile Kolloidzusammensetzung Ingredienzien jeglicher üblicher Art enthalten, z.B. Gießzusätze, Härtungsmittel, Netzmittel, Mattierungsmittel, Verdickungsmittel, Weichmacher usw. (vgl. Research Disclosure, Vol.308 (1989), Item 308119; und Vol.176 (1978), Item 17643). Ferner können zur Dimensionsstabilität synthetische Polymere (als wäßrige Dispersionen) als Zusätze verwendet werden ("Latices"). Hierzu gehören u.a. Polymere z.B. aus Alkyl(meth)acrylaten, Alkoxyalkyl(meth)acrylaten, (Meth)Acrylamiden, Vinylestern oder Olefinen allein oder in Kombination, z.B. auch mit organischen Säuren wie (Meth)Acrylsäure. Die derart erhaltenen Gießlösungen können nach an sich bekanntem Verfahren in Form einer Schicht aufgetragen werden (z.B. beschrieben in "Science and Technology of Photography", Karlheinz Keller (Ed.), VCH Verlagsges.mbH, Weinheim, 1993), wobei alle hydrophil beschichtbaren Materialien als Träger dienen können. Einsetzbare übliche Träger sind z.B. Polymere, wie Polyethylenglykolterephthalatfolien, Glas, Papier bzw. vorbeschichtete Papiere etc. In der Regel ist dabei der Träger mit einer üblichen Haftschicht versehen.

Die erfindungsgemäß zu verwendenden Farbstoffe der allgemeinen Formel I lassen sich den Kolloidschichten leicht einverleiben, verleihen ihnen eine geeignete IR-Absorptionscharakteristik und werden beim Einsatz in fotografischen Aufzeichnungsmaterialien während des fotografischen Entwicklungsprozesses irreversibel entfärbt. Besonders vorteilhaft bei der Verwendung der Farbstoffe der allgemeinen Formel I als infrarotabsorbierende Mittel in hydrophilen Kolloidschichten, beispielsweise solchen in Aufzeichnungsmaterialien, speziell fotografischen und reprografischen Aufzeichnungsmaterialien, insbesondere solchen auf Silberhalogenidbasis, ist, daß bereits mit geringen Farbstoffmengen hohe IR-Absorptionen erzielt werden, insbesondere im IR-Bereich 800 bis 1000 nm, speziell im Bereich 850 bis 950 nm. Diese überraschend günstige und bevorzugt ausgenutzte Absorptionscharakteristik dürfte darauf zurückzuführen sein, daß die Farbstoffe der allgemeinen Formel I in der hydrophilen Kolloidschicht in Form langwellig absorbierender J-Aggregate (vgl. T.H. James, The Theory of the Photographic Process, 4. Ed., Macmillan Publ. Co. Inc., London 1977) vorliegen können. Darüberhinaus besonders vorteilhaft und in keiner Weise vorhersehbar ist die Erkenntnis, daß bei einer für die Aggregation hinreichend hohen Farbstoffkonzentration einmal gebildete J-Aggregate der erfindungsgemäß eingesetzten Farbstoffe der allgemeinen Formel I eine hohe Stabilität aufweisen und beim Verdünnen bestehen bleiben, auch wenn die Endkonzentration an Farbstoff so gering ist, daß beim direkten Ansetzen einer Lösung dieser Konzentration durch Auflösen der entsprechenden Farbstoffmenge im Endvolumen keine J-Aggregate gebildet werden. Jedenfalls können durch Verdünnen einer kolloidalen Zusammensetzung, die anfänglich die Farbstoffe der allgemeinen Formel I in einer zur Aggregatbildung ausreichend hohen Konzentration enthält, starke langwellige IR-Absorptionen auch der aus der verdünnten Zusammensetzung erhältlichen Kolloidschicht mit erheblich niedrigeren Farbstoffmengen erzielt werden, als wenn die für dieselbe Endkonzentration an Farbstoff in der Kolloidschicht benötigte Farbstoffmenge direkt zu einer verdünnten Lösung aufgelöst wird. Dabei wirkt sich insbesondere auch der größere Extinktionskoeffizient des Aggregats positiv aus. Diese Farbstoffersparnis ist ein wesentlicher wirtschaftlicher Vorteil. Bevorzugt bei der Herstellung von Kolloidschichten, die die erfindungsgemäß zu verwendenden Farbstoffe der allgemeinen Formel I enthalten, sind daher Prozeduren, bei denen die J-Aggregate in einer Gießlösung mit hoher Farbstoffkonzentration erzeugt werden und nach erfolgter Bildung der Aggregate die Lösung in einem Verdünnungsschritt auf die für die Schichterzeugung gewünschte Gießkonzentration gebracht wird, wobei die J-Aggregate bestehen bleiben und nicht wieder dissoziieren.

Zum Einsatz kommen die erfindungsgemäßen hydrophilen Kolloidschichten, die Farbstoffe der allgemeinen Formel I als infrarotabsorbierende Mittel enthalten, z.B. in Aufzeichnungsmaterialien oder in Materialien, die in Kombination mit IR-detektierenden Geräten verwendet werden. Bevorzugt sind dabei fotografische und reprografische Aufzeichnungsmaterialien, insbesondere solche auf Silberhalogenid-Basis. Die Farbstoffe der allgemeinen Formel I enthaltenden Schichten haben dabei insbesondere die Funktion von Hilfs- und Filterschichten, z.B. können sie - wie oben bereits erläutert - als Antihaloschicht, fungieren, wobei in den Kolloidschichten noch zusätzliche, insbesondere kürzerwellig absorbierende Farbstoffe gemäß dem Stand der Technik enthalten sein können. In Verbindung mit infrarotdetektierenden Geräten können diese Schichten aber zugleich auch zur automatischen Prozeßsteuerung bzw. -leitung herangezogen werden. Generell können die erfindungsgemäßen hydrophilen Kolloidschichten, die Farbstoffe der allgemeinen Formel I als infrarotabsorbierende Mittel enthalten und die - wie bereits gesagt - auf unterschiedlichsten Trägermaterialien aufgebracht sein können, als Detektionsschicht für infrarotdetektierende Geräte, z.B. in IR-Laser-Detektionssystemen, eingesetzt werden.

Gegenstand der vorliegenden Erfindung sind auch Materialien, insbesondere Aufzeichnungsmaterialien, bevorzugt fotografische und reprografische Aufzeichnungsmaterialien, besonders bevorzugt auf Silberhalogenidbasis, die dadurch gekennzeichnet sind, daß sie als infrarotabsorbierende Mittel in einer oder mehreren hydrophilen Kolloidschichten einen oder mehrere Farbstoffe der allgemeinen Formel I enthalten, 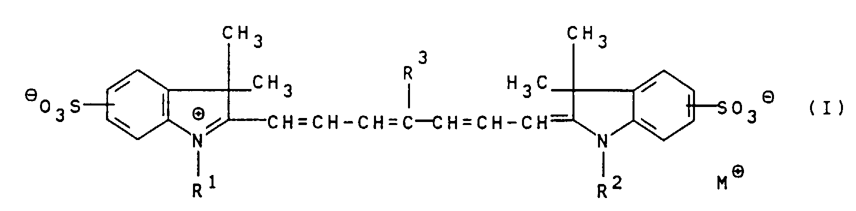 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy- bzw. Carboxylat- und keine Sulfatogruppen auftreten können, und M^{⊕} für ein einwertiges Kation oder ein Äquivalent eines mehrwertigen Kations steht.

Für die erfindungsgemäßen Aufzeichnungsmaterialien gilt das oben zu den Farbstoffen, den Substituenten in der allgemeinen Formel I, den Kolloidschichten, Trägern etc. bereits Gesagte. Die Aufzeichnungsmaterialien weisen also z.B. in der Regel einen Mehrschichtaufbau auf, wobei Schichten mit Farbstoffen der allgemeinen Formel I in jeder Positionierung innerhalb des Materials eingesetzt werden können. Als hydrophiles Kolloid kann beispielsweise Polyvinylalkohol, Carboxymethylcellulose, Natriumalginat, Casein, Polyvinylpyrrolidon, bevorzugt aber Gelatine zugegen sein, die genannten Materialien können darüberhinaus auch in beliebigen Mischungen untereinander verwendet werden. In der Regel enthalten die Kolloidschichten auch noch weitere Ingredienzien, beispielsweise Gießzusätze, Netzmittel, Härtungsmittel, Mattierungsmittel, Verdickungsmittel, Weichmacher etc. Träger für die erfindungsgemäßen Aufzeichnungsmaterialien können aus den hierfür üblicherweise eingesetzten Substanzen bestehen, z.B. Polymere, wie Polyethylenglykolterephthalat, Glas, Papier, beschichtetem Papier etc. Der oder die Farbstoffe der allgemeinen Formel I sind in der oder den Kolloidschichten der erfindungsgemäßen Aufzeichnungsmaterialien bevorzugt in Mengen von 5 bis 500 mg/m², besonders bevorzugt 10 bis 200 mg/m² enthalten. Bevorzugt sind in den erfindungsgemäßen Aufzeichnungsmaterialien die oben als bevorzugt bezeichneten Farbstoffe der allgemeinen Formel I enthalten.

Konkret bekannt sind folgende Farbstoffe der allgemeinen Formel I (siehe Chem. Abstr. 111:144195a (1989); Chem.Abstr. 115: 146699z (1991) und Chem.Abstr. 110:222544j (1989)):
a) Substanzen der Formel I, in der die Sulfonatgruppen in den 5-Positionen der beiden Indolsysteme stehen, R¹ und R² für Methyl, R³ für Wasserstoff und M^{⊕} für Na^{⊕} oder 1/2 Ni^{2⊕} steht;
b) Substanz der Formel I, in der die Sulfonatgruppen in den 6-Positionen der beiden Indolsysteme stehen, R¹ und R² für Methyl, R³ für Wasserstoff und M^{⊕} für K^{⊕} steht;
c) Substanz der Formel I, in der die Sulfonatgruppen in den 5-Positionen der beiden Indolsysteme stehen, R¹ und R² für Ethyl stehen, R³ für Methyl steht und M^{⊕} für K^{⊕} steht.

Gegenstand der vorliegenden Erfindung sind auch die bisher nicht bekannten Cyaninfarbstoffe der allgemeinen Formel I, 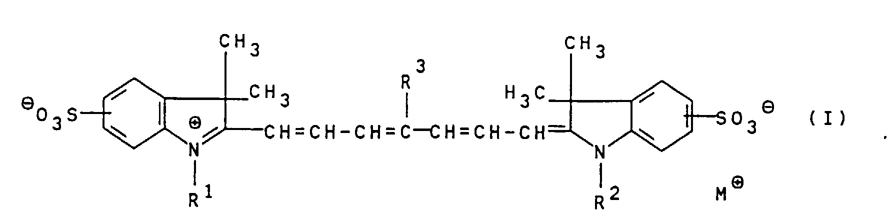 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy- bzw. Carboxylat- und keine Sulfatogruppen auftreten können, und M^{⊕} für ein einwertiges Kation oder ein Äquivalent eines mehrwertigen Kations steht,
wobei aber diejenigen Verbindungen der allgemeinen Formel I, in der gleichzeitig die Sulfonatgruppen in den 5-Positionen der beiden Indolsysteme stehen, R¹ und R² für Methyl stehen, R³ für Wasserstoff steht und M^{⊕} für Na^{⊕} oder 1/2 Ni^{2⊕} steht, diejenige Verbindung, in der gleichzeitig die Sulfonatgruppen in den 6-Positionen der beiden Indolsysteme stehen, R¹ und R² für Methyl stehen, R³ für Wasserstoff steht und M^{⊕} für K^{⊕} steht, sowie diejenige Verbindung der allgemeinen Formel I, in der gleichzeitig die Sulfonatgruppen in den 5-Positionen der beiden Indolsysteme stehen, R¹ und R² für Ethyl stehen, R³ für Methyl steht und M^{⊕} für K^{⊕} steht, ausgeschlossen sind.

Bezüglich Erläuterungen zu den Substituenten in den erfindungsgemäßen Cyaninfarbstoffen der allgemeinen Formel I wird ausdrücklich auf die obigen Ausführungen verwiesen. Dies gilt auch für bevorzugte Bedeutungen der Substituenten, wobei die ausgeschlossenen Verbindungen zu beachten sind.

Die erfindungsgemäßen Substanzen der allgemeinen Formel I können nach an sich bekannten Herstellverfahren unter üblichen Bedingungen erhalten werden, beispielsweise - wie oben bereits erläutert - aus den entsprechenden Trimethyl-3H-indoliumsulfonaten mit Glutacondialdehyd-Derivaten. Verwendung finden die Cyaninfarbstoffe der allgemeinen Formel I beispielsweise als infrarotabsorbierende Mittel in Kolloidschichten in Aufzeichnungsmaterialien, z.B. fotografischen Aufzeichnungsmaterialien, wobei sie eine überraschend langwellige und überraschend starke Absorption zeigen.

### BEISPIELE

### Herstellungsbeispiel 1

Herstellung des Farbstoffs der Formel Ia: 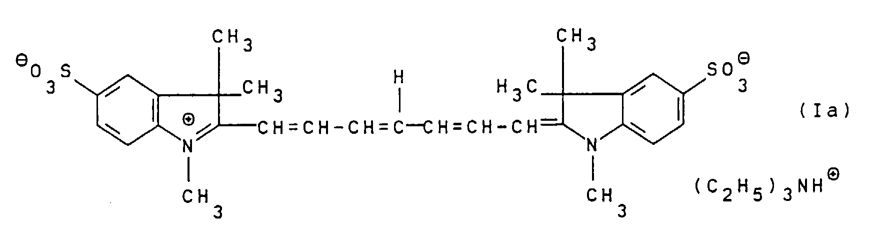 Eine Mischung aus 5,1 g 1,2,3,3-Tetramethyl-3H-indolium-5-sulfonat (vgl. Alan S. Waggoner et al, Bioconjugate Chemistry 4 (2), 105-111 (1993)), 30 ml Essigsäureanhydrid, 2,8 g Glutacondialdehyd-dianilhydrochlorid und 5 ml Triethylamin wird 5 min unter Rückfluß erhitzt. Dann wird auf 20°C gekühlt und der ausgefallene Farbstoff abgetrennt und getrocknet. Der Farbstoff wird als dunkles Pulver erhalten. λmax = 742 nm (Wasser).

### Herstellungsbeispiel 2

Herstellung des Farbstoffs der Formel Ib:

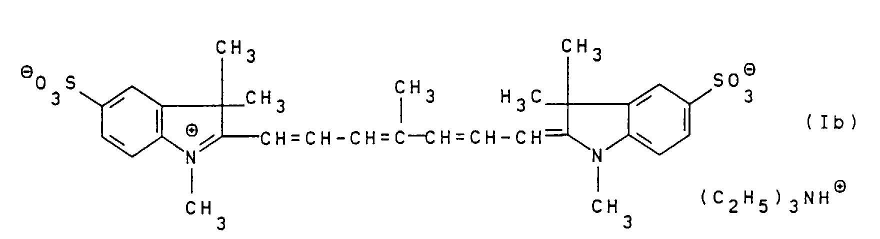

Der Farbstoff der Formel Ib wird analog dem Herstellungsbeispiel 1 erhalten, wobei statt 2,8 g Glutacondialdehyd-dianilhydrochlorid 2.95 g 3-Methylglutacondialdehyddianilhydrochlorid eingesetzt werden. Der Farbstoff wird als dunkles Pulver erhalten.
λmax = 755 nm (Wasser).

### Anwendungsbeispiel 1

Man stellt Ausgangslösungen (Lösungen la und 1b) der folgenden Zusammensetzung her:

| | |
|---|---|
| Wasser | 188,0 ml |
| Farbstoff Ia bzw. Ib | 0,5 g |
| Inertgelatine | 12,0 g |
| Natriumdodecylsulfat (1%ige wäßrige Lösung) | 10,0 ml |
| Polyacrylat-Latex (30%ige wäßrige Dispersion (Teilchen-Durchmesser ca. 2 µm)) | 10,0 ml |
| Formaldehyd (5%ige wäßrige Lösung) | 10,0 ml |

Die so hergestellten Lösungen werden mit den in Tabelle 1 angegebenen Mengen Wasser verdünnt und auf herkömmliche Weise auf mit einer Haftschicht versehenen Polyethylenglykolterephthalat-Träger gegossen. Die Absorptionsmaxima, die Menge Farbstoff pro m² sowie das dekadische Absorptionsvermögen A am Absorptionsmaximum der erhaltenen Gelatineschichten sind in der nachfolgenden Tabelle 1 aufgeführt.

**TABELLE 1**

| Guß-Nr. | Farbstoff | Menge Wasser [g] | Menge Farbstoff [mg/m²] | λmax [nm] | A bei λmax |
|---|---|---|---|---|---|
| 1 | Ia | 220 | 98 | 920 | 3,0 |
| 2 | Ia | 330 | 72 | 920 | 2,1 |
| 3 | Ia | 440 | 40 | 920 | 1,2 |
| | | | | | |
| 4 | Ib | 220 | 101 | 926 | 2,9 |
| 5 | Ib | 330 | 74 | 926 | 1,9 |
| 6 | Ib | 440 | 39 | 926 | 1,2 |

Zu Vergleichszwecken wurde eine Gießlösung (Lösung 2) der folgenden Zusammensetzung hergestellt:

| | |
|---|---|
| Wasser | 188,00 ml |
| Farbstoff Ia | 0,075 g |
| Inertgelatine | 12,00 g |
| Natriumdodecylsulfat (1%ige wäßrige Lösung) | 10,00 ml |
| Polyacrylat-Latex (30%ige wäßrige Dispersion (Teilchen-Durchmesser ca. 2 µm)) | 10,00 ml |
| Formaldehyd (5%ige wäßrige Lösung) | 10,00 ml |

Die Lösung wurde ebenfalls auf herkömmliche Weise auf einen mit Haftschicht versehenen Träger gegossen. Das Absorptionsmaximum, die Menge Farbstoff pro m² sowie das dekadische Absorptionsvermögen A am Absorptionsmaximum und bei 920 nm der erhaltenen Gelatineschicht sind in der nachfolgenden Tabelle 2 aufgeführt.

**TABELLE 2**

| Guß-Nr. | Farbstoff | Menge Farbstoff [mg/m²] | λmax [nm] | A bei λmax | A bei 920 nm |
|---|---|---|---|---|---|
| 7 | Ia | 40 | 759 | 0,6 | <0,1 |

Die Ergebnisse zeigen, daß beim Verdünnen der Ausgangslösungen Ia und Ib die J-Aggregate erhalten bleiben, so daß sich unabhängig von der zugesetzten Menge Wasser das dekadische Absorptionsvermögen der erhaltenen Schichten beim Absorptionsmaximum proportional zur Menge Farbstoff pro m² verhält. Im Gegensatz dazu zeigt die Schicht, die mit der Lösung 2, die von vornherein nur eine geringere Farbstoffkonzentration enthält, erhalten wird, keine Aggregationen. Der Vergleich von Guß Nr. 3, 6 und 7, die alle ca. 40 mg Farbstoff pro m² enthalten, zeigt den besonderen, im Vorliegen einer starken langwelligen Absorptionsbande bei 850 bis 950 nm bestehenden Vorteil einer Prozedur, die ausgehend von einer konzentrierten Farbstofflösung einen Verdünnungsschritt beinhaltet.

### Anwendungsbeispiel 2

Die gießfertigen Lösungen 1 bis 7 wurden zunächst ohne Zugabe der Formaldehyd-Lösung bei 35°C über 6 Stunden gelagert und nachfolgend dann nach Zugabe der Formaldehyd-Lösung wie im Anwendungsbeispiel 1 auf einen Träger aufgebracht.
Die erhaltenen Schichten lieferten die gleichen Ergebnisse, wie sie mit den nicht gelagerten Gießlösungen erhalten wurden, die Absorptionskurven im Bereich 400 bis 1100 nm waren praktisch identisch.

### Anwendungsbeispiel 3

Die im Anwendungsbeispiel 1 erhaltenen farbstoffhaltigen hydrophilen Kolloidschichten aus Guß Nr. 1 bis 6 wurden zur Prüfung, ob sie in fotografischen Verarbeitungslösungen schnell und vollkommen entfärbt werden, dem folgenden fotografischen Verarbeitungsprozeß unterworfen:

2-minütige Entwicklung in einem üblichen Metol-Hydrochinon-Entwickler bei 20°C, anschließende 5-minütige Behandlung in einem üblichen Fixierbad (enthaltend Natriumthiosulfat und Natriumdisulfit) und nachfolgendes 10-minütiges Spülen mit Wasser und anschließender Trocknung.

Die Restfärbungen wurden visuell beurteilt. Es wurden die in Tabelle 3 angegebenen Resultate erhalten.

**TABELLE 3**

| Guß Nr. | Restfärbung |
|---|---|
| 1 | keine |
| 2 | keine |
| 3 | keine |
| 4 | keine |
| 5 | keine |
| 6 | keine |

Die erfindungsgemäß verwendeten Farbstoffe Ia und Ib hinterlassen also keine Restfärbung.

## Patentansprüche

1. Verwendung von Farbstoffen der allgemeinen Formel I, 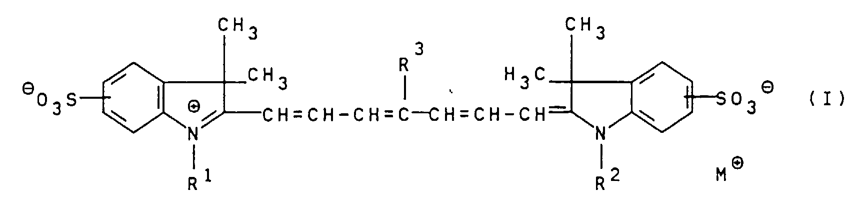 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy- bzw. Carboxylat- und keine Sulfatogruppen auftreten können, und
M^{⊕} für ein einwertiges Kation oder ein Äquivalent eines mehrwertigen Kations steht,
als infrarotabsorbierendes Mittel in hydrophilen Kolloidschichten.

2. Verwendung gemäß Anspruch 1, dadurch gekennzeichnet, daß in der allgemeinen Formel I unabhängig voneinander die Sulfonatgruppen in den 5- oder 6-Positionen der endständigen Indolringe stehen, bevorzugt beide in den 5-Positionen stehen;
R¹ und R² für (C₁-C₃)-n-Alkyl stehen, bevorzugt beide für Methyl stehen;
R³ für Wasserstoff oder (C₁-C₄)-Alkyl steht, bevorzugt für Wasserstoff oder Methyl steht; und
M^{⊕} für ein Alkalimetallkation, bevorzugt das Natrium- oder Kaliumion, oder das unsubstituierte Ammoniumion oder ein durch 1 bis 4 gleiche oder verschiedene (C₁-C₄)-Alkylreste substituiertes Ammoniumion, bevorzugt das Triethylammoniumion, oder das Wasserstoffion steht.

3. Verwendung gemäß Anspruch 1 und/oder 2, dadurch gekennzeichnet, daß in der allgemeinen Formel I gleichzeitig die beiden Sulfonatgruppen sich in den 5-Positionen der beiden endständigen Indolsysteme befinden, R¹ und R² für Methyl stehen, R³ für Wasserstoff steht und M^{⊕} für das Natrium-, das Kalium-, das Ammonium- oder das Triethylammoniumion, bevorzugt das Natriumion steht.

4. Verwendung gemäß einem oder mehreren der Ansprüche 1 bis 3, dadurch gekennzeichnet, daß sie in einem Aufzeichnungsmaterial, bevorzugt in einem fotografischen oder reprografischen Aufzeichnungsmaterial, besonders bevorzugt einem auf Silberhalogenid-Basis, erfolgt.

5. Verwendung gemäß einem oder mehreren der Ansprüche 1 bis 4, dadurch gekennzeichnet, daß sie für Detektionszwecke erfolgt.

6. Verwendung gemäß einem oder mehreren der Ansprüche 1 bis 5, dadurch gekennzeichnet, daß die Farbstoffe der allgemeinen Formel I in der hydrophilen Kolloidschicht in Form von J-Aggregaten vorliegen.

7. Aufzeichnungsmaterial, dadurch gekennzeichnet, daß es als infrarotabsorbierendes Mittel in einer oder mehreren hydrophilen Kolloidschichten einen oder mehrere Farbstoffe der allgemeinen Formel I enthält, 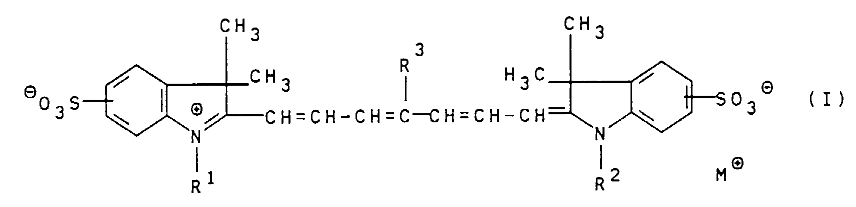 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy- bzw. Carboxylat- und keine Sulfatogruppen auftreten können, und M^{⊕} für ein einwertiges Kation oder ein Äquivalent eines mehrwertigen Kations steht.

8. Aufzeichnungsmaterial gemäß Anspruch 7, dadurch gekennzeichnet, daß in der allgemeinen Formel I unabhängig voneinander
die Sulfonatgruppen in den 5- oder 6-Positionen der endständigen Indolringe stehen, bevorzugt beide in den 5-Positionen stehen;
R¹ und R² für (C₁-C₃)-n-Alkyl stehen, bevorzugt beide für Methyl stehen;
R³ für Wasserstoff oder (C₁-C₄)-Alkyl steht, bevorzugt für Wasserstoff oder Methyl steht; und
M^{⊕} für ein Alkalimetallkation, bevorzugt das Natrium- oder Kaliumion, oder das unsubstituierte Ammoniumion oder ein durch 1 bis 4 gleiche oder verschiedene (C₁-C₄)-Alkylreste substituierte Ammoniumion, bevorzugt das Triethylammonium, oder das Wasserstoffion steht, und das besonders bevorzugt in der allgemeinen Formel I gleichzeitig die beiden Sulfonatgruppen sich in den 5-Positionen der beiden endständigen Indolsysteme befinden, R¹ und R² für Methyl stehen, R³ für Wasserstoff steht und M^{⊕} für das Natrium-, das Kalium-, das Ammonium- oder das Triethylammoniumion, bevorzugt das Natriumion steht.

9. Aufzeichnungsmaterial gemäß Anspruch 7 und/oder 8, dadurch gekennzeichnet, daß es sich um ein fotografisches oder reprografisches Aufzeichnungsmaterial, bevorzugt um eines auf Silberhalogenid-Basis, handelt.

10. Aufzeichnungsmaterial gemäß einem oder mehreren der Ansprüche 7 bis 9, dadurch gekennzeichnet, daß es in mindestens einer hydrophilen Kolloidschicht mindestens einen Farbstoff der allgemeinen Formel I in einer Menge von 5 bis 500 mg/m² enthält.

11. Cyaninfarbstoffe der allgemeinen Formel I, 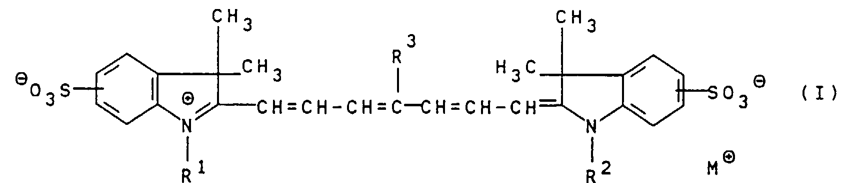 in der
R¹, R² und R³ unabhängig voneinander für Wasserstoff, unsubstituiertes oder durch Halogen oder Phenyl monosubstituiertes (C₁-C₆)-Alkyl oder unsubstituiertes oder mono- oder disubstituiertes Phenyl stehen und R³ darüberhinaus auch für Halogen oder (C₃-C₇)-Cycloalkyl steht, wobei als Substituent in Phenylgruppen aber keine Sulfo-bzw. Sulfonatgruppen, keine Carboxy- bzw. Carboxylat- und keine Sulfatogruppen auftreten können, und
M^{⊕} für ein einwertiges Kation oder ein Äquivalent eines mehrwertigen Kations steht,
wobei aber diejenigen Verbindungen der allgemeinen Formel I, in der gleichzeitig die Sulfonatgruppen in den 5-Positionen der beiden Indolsysteme stehen, R¹ und R² für Methyl stehen, R³ für Wasserstoff steht und M^{⊕} für Na^{⊕} oder 1/2 Ni^{2⊕} steht, diejenige Verbindung, in der gleichzeitig die Sulfonatgruppen in den 6-Positionen der beiden Indolsysteme stehen, R¹ und R² für Methyl stehen, R³ für Wasserstoff steht und M^{⊕} für K^{⊕} steht, sowie diejenige Verbindung der allgemeinen Formel I, in der gleichzeitig die Sulfonatgruppen in den 5-Positionen der beiden Indolringe stehen, R¹ und R² für Ethyl stehen, R³ für Methyl steht und M^{⊕} für K^{⊕} steht, ausgeschlossen sind.

## Claims

1. Use of dyes according to the general formula I, 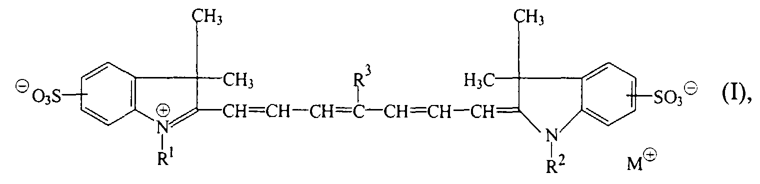 in which
R¹, R² and R³ independently of each other are hydrogen, unsubstituted (C₁-C₆)-alkyl or halogen- or phenyl-monosubstituted (C₁-C₆)-alkyl or unsubstituted phenyl- or mono- or disubstituted phenyl, and R³ is in addition also halogen or (C₃-C₇)-cycloalkyl, however, with the proviso that no sulfo or sulfonate groups, respectively, no carboxy or carboxylate groups, respectively, and no sulfato groups may occur as substituent in phenyl groups, and that M^{⊕} is a monovalent cation or an equivalent of a multivalent cation,
as infrared absorbing means in hydrophilic colloid layers.

2. Use according to claim 1, characterized in that in the general formula I the sulfonate groups are independently of each other in 5- or 6-position of the terminal indole rings, preferably both in 5-position;
R¹ and R² are (C₁-C₃)-n-alkyl, preferably both methyl;
R³ is hydrogen or (C₁-C₄)-alkyl, preferably hydrogen or methyl; and
M^{⊕} is an alkali metal cation, preferably the sodium or potassium ion, or the unsubstituted ammonium ion or an ammonium ion substituted by one to four identical or different (C₁-C₄)-alkyl radicals, preferably the triethyl ammonium ion, or the hydrogen ion.

3. Use according to claim 1 and/or 2, characterized in that in the general formula I the two sulfonate groups are simultaneously in 5-position of the two terminal indole systems, R¹ and R² are methyl, R³ is hydrogen, and M^{⊕} is the sodium, the potassium, the ammonium or the triethyl ammonium ion, preferably for the sodium ion.

4. Use according to one or more of the claims 1 to 3, characterized in that it occurs within a recording material, preferably in a photographic or reprographic recording material, particularly preferred in one that is based on silver halogenide.

5. Use according to one or more of the claims 1 to 4, characterized in that it is carried out for detection purposes.

6. Use according to one or more of the claims 1 to 5, characterized in that the dyes of the general formula I are present in the hydrophilic colloid layer in the form of J-aggregates.

7. Recording material, characterized in that it comprises as infrared absorbing means in one or more hydrophilic colloid layers one or more dyes according to the general formula I, 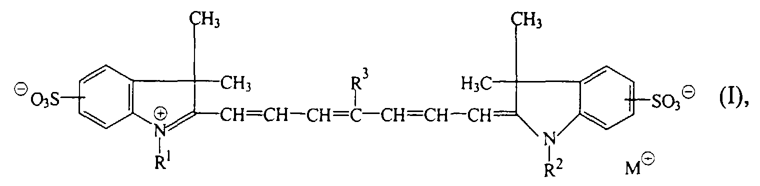 in which
R¹, R² and R³ independently of each other are hydrogen, non-substituted or halogen- or phenyl-monosubstituted (C₁-C₆)-alkyl, or unsubstituted or mono- or disubstituted phenyl, and R³ is in addition also halogen or (C₃-C₇)-cycloalkyl, however, with the proviso that in phenyl groups no sulfo or sulfonate groups, respectively, no carboxy or carboxylate-groups, respectively, and no sulfato groups may occur as substituent, and that M^{⊕} is a monovalent cation or an equivalent of a multivalent cation.

8. Recording material according to claim 7, characterized in that in the general formula I independently of each other
the sulfonate groups are in 5- or 6-position of the terminal indole rings, preferably both being in 5-position;
R¹ and R² are (C₁-C₃)-n-alkyl, preferably both methyl;
R³ is hydrogen or (C₁-C₄)-alkyl, preferably hydrogen or methyl; and
M^{⊕} is an alkali metal cation, preferably the sodium or potassium ion, or the unsubstituted ammonium ion, or an ammonium ion substituted with either one to four identical or different (C₁-C₄)-alkyl radicals, preferably the triethyl ammonium ion, or the hydrogen ion, and that particularly preferred in the general formula I the two sulfonate groups simultaneously are in 5-position of the two terminal indole systems, R¹ and R² are methyl, R³ is hydrogen, and M^{⊕} is the sodium, the potassium, the ammonium, or the triethyl ammonium ion, preferably the sodium ion.

9. Recording material according to claim 7 and/or 8, characterized in that it is a photographic or reprographic recording material, preferably one that is based on silver halogenide.

10. Recording material according to one or more of the claims 7 to 9, characterized in that it comprises at least in one hydrophilic colloid layer at least one dye according to the general formula I in an amount of 5 to 500 mg/m².

11. Cyanin dyes according to the general formula I, 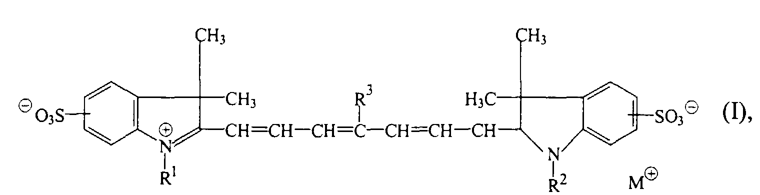 in which
R¹, R² and R³ independently of each other are hydrogen, unsubstituted or halogen- or phenylmonosubstituted (C₁-C₆)-alkyl, or unsubstituted or mono- or disubstituted phenyl, and that R³ is in addition also halogen or (C₃-C₇)-cycloalkyl, however, with the proviso that in phenyl groups no sulfo or sulfonate groups, respectively, no carboxy or carboxylate groups, respectively, and no sulfato groups may occur as substituent, and that M^{⊕} is a monovalent cation or an equivalent of a multivalent cation,
however, with the proviso that those compounds according to the general formula I, in which the sulfonate groups simultaneously are in 5-position of the two indole systems, in which R¹ and R² are methyl, in which R³ is hydrogen, and in which M^{⊕} is Na^{⊕} or ½ Ni^{2⊕}; that compound, in which the sulfonate groups simultaneously are in 6-position of the two indole systems, in which R¹ and R² are methyl, in which R³ is hydrogen, and in which M^{⊕} is K^{⊕}; as well as that compound according to the general formula I, in which the sulfonate groups simultaneously are in 5-position of the two indole rings, in which R¹ and R² are ethyl, in which R³ is methyl, and in which M^{⊕} is K^{⊕},
are excluded.

## Revendications

1. Utilisation de colorants de formule générale I 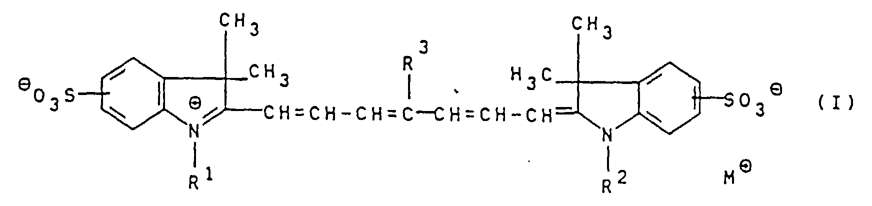 dans laquelle
R¹, R² et R³ représentent chacun indépendamment des autres un atome d'hydrogène, un groupe- alkyle en C₁-C₆ non-substitué ou monosubstitué par un groupe halogéno ou phényle, ou un groupe phényle non-substitué ou mono- ou disubstitué, et R³ représente en outre aussi un groupe halogéno ou cycloalkyle en C₃-C₇, auquel cas cependant, en tant que substituant dans les groupes phényle, il ne peut y avoir aucun groupe sulfo ou sulfonate, aucun groupe carboxy ou carboxylate, ni aucun groupe sulfato, et M^{⊕} est un cation monovalent ou un équivalent d'un cation polyvalent,
en tant qu'agent absorbant les infrarouges dans des couches colloïdales hydrophiles.

2. Utilisation selon la revendication 1, caractérisé en ce que, dans la formule générale I, les groupes sulfonate se trouvent indépendamment l'un de l'autre sur les positions 5 ou 6 des noyaux indole terminaux, et de préférence les deux se trouvent sur les positions 5 ;
R¹ et R² sont des groupes n-alkyle en C₁-C₃, et de préférence représentent tous les deux des groupes méthyle ;
R³ est un atome d'hydrogène ou un groupe alkyle en C₁-C₄, de préférence un atome d'hydrogène ou le groupe méthyle ; et
M^{⊕} est un cation d'un métal alcalin, de préférence l'ion sodium ou potassium, ou encore l'ion ammonium non-substitué, ou un ion ammonium substitué par 1 à 4 substituants alkyle en C₁-C₄ identiques ou différents, de préférence l'ion triéthylammonium, ou encore l'ion hydrogène.

3. Utilisation selon la revendication 1 et/ou 2, caractérisé en ce que dans la formule générale I, les deux groupes sulfonate se trouvent simultanément sur les positions 5 des deux systèmes indole terminaux, R¹ et R² sont des groupes méthyle, R³ est un atome d'hydrogène, et M^{⊕} est l'ion sodium, potassium, ammonium ou triéthylammonium, de préférence l'ion sodium.

4. Utilisation selon l'une ou plusieurs des revendications 1 à 3, caractérisée en ce qu'elle a lieu dans un matériau d'enregistrement, de préférence dans un matériau d'enregistrement photographique ou reprographique, d'une manière particulièrement préférée dans un tel matériau à base d'un halogénure d'argent.

5. Utilisation selon l'une ou plusieurs des revendications 1 à 4, caractérisée en ce qu'elle a lieu à des fins de détection.

6. Utilisation selon l'une ou plusieurs des revendications 1 à 5, caractérisée en ce que les colorants de formule générale I se trouvant dans la couche colloïdale hydrophile se présentent sous forme d'agrégats J.

7. Matériau d'enregistrement caractérisé en ce qu'il contient en tant qu'agent absorbant les infrarouges, dans une ou plusieurs couches colloïdales hydrophiles, un ou plusieurs colorants de formule générale I, 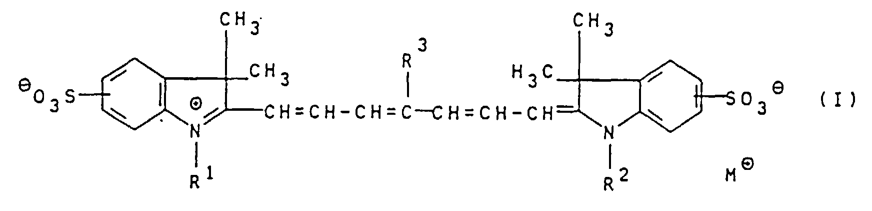 dans laquelle
R¹, R² et R³ représentent chacun indépendamment des autres un atome d'hydrogène, un groupe alkyle en C₁-C₆ non-substitué ou monosubstitué par un groupe halogéno ou phényle, ou un groupe phényle non-substitué ou mono- ou disubstitué, et R³ représente en outre aussi un groupe halogéno ou cycloalkyle en C₃-C₇, auquel cas cependant, en tant que substituant dans les groupes phényle, il ne peut y avoir aucun groupe sulfo ou sulfonate, aucun groupe carboxy ou carboxylate, ni aucun groupe sulfato, et M^{⊕} est un cation monovalent ou un équivalent d'un cation polyvalent.

8. Matériau d'enregistrement selon -la revendication 7, caractérisé en ce que, dans la formule générale I, les groupes sulfonate se trouvent indépendamment l'un de l'autre sur les positions 5 ou 6 des noyaux indole terminaux, et de préférence les deux se trouvent sur les positions 5 ;
R¹ et R² sont des groupes n-alkyle en C₁-C₃, et de préférence représentent tous les deux des groupes méthyle ;
R³ est un atome d'hydrogène ou un groupe alkyle en C₁-C₄, de préférence un atome d'hydrogène ou le groupe méthyle ; et
M^{⊕} est un cation d'un métal alcalin, de préférence l'ion sodium ou potassium, ou encore l'ion ammonium non-substitué, ou un ion ammonium substitué par 1 à 4 substituants alkyle en C₁-C₄ identiques ou différents, de préférence l'ion triéthylammonium, ou encore l'ion hydrogène, et en ce que, de préférence, dans la formule générale I, les deux groupes sulfonate se trouvent simultanément sur les positions 5 des deux systèmes indole terminaux, R¹ et R² sont des groupes méthyle, R³ est un atome d'hydrogène, et M^{⊕} est l'ion sodium, potassium, ammonium ou triéthylammonium, de préférence l'ion sodium.

9. Matériau d'enregistrement selon la revendication 7 et/ou 8, caractérisé en ce qu'il s'agit d'un matériau d'enregistrement photographique ou reprographique, de préférence d'un tel matériau d'enregistrement à base d'un halogénure d'argent.

10. Matériau d'enregistrement selon l'une ou plusieurs des revendications 7 à 9, caractérisé en ce qu'il contient, dans au moins une couche colloïdale hydrophile, au moins un colorant de formule générale I en une quantité de 5 à 500 mg/m².

11. Colorants de cyanine de formule générale I 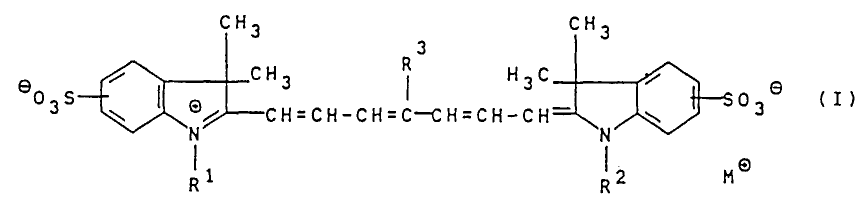 dans laquelle
R¹, R² et R³ représentent chacun indépendamment des autres un atome d'hydrogène, un groupe alkyle en C₁-C₆ non-substitué ou monosubstitué par un groupe halogéno ou phényle, ou un groupe phényle non-substitué ou mono- ou disubstitué, et R³ représente en outre aussi un groupe halogéno ou cycloalkyle en C₃-C₇, auquel cas cependant, en tant que substituant dans les groupes phényle, il ne peut y avoir aucun groupe sulfo ou sulfonate, aucun groupe carboxy ou carboxylate, ni aucun groupe sulfato, et M^{⊕} est un cation monovalent ou un équivalent d'un cation polyvalent,
mais cependant à l'exclusion des composés de formule générale I dans laquelle les groupes sulfonate se trouvent simultanément sur les positions 5 des deux systèmes indole, R¹ et R² sont des groupes méthyle, R³ est un atome d'hydrogène et M^{⊕} est Na^{⊕} ou 1/2 Ni^{2⊕} ; du composé dans lequel les groupes sulfonate se trouvent simultanément sur les positions 6 des deux systèmes indole, R¹ et R² sont des groupes méthyle, R³ est un atome d'hydrogène et M^{⊕} est K^{⊕} ; ainsi que du composé de formule générale I dans laquelle les groupes sulfonate se trouvent simultanément sur les positions 5 des deux noyaux indole, R¹ et R² sont des groupes éthyle, R³ est le groupe méthyle, et M^{⊕} est K^{⊕} .
